# FASCICULE DE BREVET EUROPEEN

(11) **EP 4 177 157 B1**
(45) Date de publication et mention de la délivrance du brevet: **20.12.2023**
(21) Numéro de dépôt: 22204551.0
(22) Date de dépôt: 28.10.2022
(51) Int. Cl.: B64C 1/18, B64C 1/06

(54) **AÉRONEF COMPRENANT DES RAILS ARTICULÉS ET INTÉGRÉS AU PLANCHER D'UNE CABINE**
FLUGZEUG MIT GELENKIG VERBUNDENEN UND IM KABINENBODEN INTEGRIERTEN SCHIENEN
AIRCRAFT COMPRISING ARTICULATED RAILS INTEGRATED IN THE FLOOR OF A CABIN

(30) Priorité: 09.11.2021 FR 2111903
(43) Date de publication de la demande: 10.05.2023
(73) Titulaire: Airbus Operations (S.A.S.), 31060 Toulouse Cedex 9 (FR)
(72) Inventeur: ORTEU, Benoit, 31060 TOULOUSE (FR); MIL, Ludovic, 31060 TOULOUSE (FR); LAGANIER, Lionel, 31060 TOULOUSE (FR); ROBERT, Philippe, 31060 TOULOUSE (FR); MARTY, Dominique, 31060 TOULOUSE (FR)
(74) Mandataire: Airbus-OPS SAS

(56) Documents cités:
- EP-A1- 2 881 238
- FR-A1- 2 913 400
- US-A1- 2015 108 273
- US-A1- 2020 088 225
- US-A1- 2021 061 484

## Description

La présente demande se rapporte à un aéronef comprenant des rails articulés et intégrés au plancher d'une cabine, comme décrit par exemple das le document FR2913400A1.

Selon un mode de réalisation de l'art antérieur, un aéronef comprend un fuselage, des ailes ainsi qu'un caisson central de voilure positionné en partie inférieure du fuselage et reliant les ailes au fuselage. Dans le cas d'un aéronef destiné au transport de fret, le fuselage comprend une cabine positionnée au-dessus du caisson central de voilure et dans laquelle peuvent être stockés des conteneurs. Cette cabine peut comprendre un plancher équipé de rails sur lesquels peuvent rouler les conteneurs. Par cabine, on entend pour la présente demande une cabine ou une soute.

Selon un mode de réalisation de l'art antérieur, le plancher est une structure porteuse configurée pour s'adapter aux mouvements et/ou aux déformations entre le caisson central de voilure et le tronçon de fuselage situé à l'avant du caisson central de voilure. Les rails sont rapportés sur le plancher. Cette configuration n'est pas satisfaisante car elle tend à réduire la hauteur disponible entre les rails et le plafond de la cabine.

La présente invention vise à remédier à tout ou partie des inconvénients de l'art antérieur.

A cet effet, l'invention a pour objet un aéronef comprenant un plancher positionné au-dessus d'un caisson central de voilure et dans un tronçon de fuselage avant positionné, selon une direction longitudinale, à l'avant du caisson central de voilure, le plancher comprenant au moins un rail qui s'étend selon la direction longitudinale et présente au moins une âme.

Selon l'invention, le rail comprend au moins des premier et deuxième tronçons de rail, au moins une articulation reliant une première extrémité de l'âme du premier tronçon de rail et une deuxième extrémité de l'âme du deuxième tronçon de rail, l'articulation comprenant au moins une éclisse qui présente des première et deuxième extrémités, un axe de pivotement orienté perpendiculairement à la direction longitudinale, traversant la première extrémité de l'âme du premier tronçon de rail et la première extrémité de l'éclisse ainsi qu'au moins une première liaison complète reliant la deuxième extrémité de l'âme du deuxième tronçon de rail et la deuxième extrémité de l'éclisse.

Cette solution permet aux rails de s'adapter aux mouvements et/ou déformations entre les différents tronçons du fuselage. Par conséquent, le rail peut être intégré dans le plancher, ce qui permet, dans le cas d'un plancher d'une cabine, d'optimiser la hauteur disponible entre les rails et le plafond de la cabine.

Selon une autre caractéristique, chaque articulation comprend des première et deuxième éclisses positionnées de part et d'autre de l'âme de chacune des première et deuxième extrémités des premier et deuxième tronçons de rail, les première et deuxième éclisses présentant des premières extrémités traversées par l'axe de pivotement et des deuxièmes extrémités reliées par au moins une liaison complète à la deuxième extrémité de l'âme du deuxième tronçon de rail.

Selon une autre caractéristique, l'âme de chacune des première et deuxième extrémités des premier et deuxième tronçons de rail comprend des première et deuxième faces. En complément, chaque articulation comprend une contreplaque plaquée contre la première face de la première extrémité de l'âme du premier tronçon de rail et reliée à cette première extrémité par une liaison complète ; la première extrémité de la première éclisse étant plaquée contre la contreplaque ; la deuxième extrémité de la première éclisse étant plaquée contre la première face de la deuxième extrémité de l'âme du deuxième tronçon de rail et reliée à cette deuxième extrémité par une liaison complète ; la première extrémité de la deuxième éclisse étant plaquée contre la deuxième face de la première extrémité de l'âme du premier tronçon de rail ; la deuxième extrémité de la deuxième éclisse étant plaquée contre la deuxième face de la deuxième extrémité de l'âme du deuxième tronçon de rail et reliée à cette deuxième extrémité par une liaison complète ; l'axe de pivotement traversant la première extrémité de l'âme du premier tronçon de rail, la contreplaque ainsi que les premières extrémités des première et deuxième éclisses.

Selon une autre caractéristique, la première éclisse comprend un décrochement entre ses première et deuxième extrémités, pour loger la contreplaque.

Selon une autre caractéristique, le rail comprend une plaque horizontale qui présente une face supérieure sur laquelle est positionnée l'âme. En complément, la première éclisse comprend des première et deuxième ailes, formant un angle d'environ 90°, réalisées d'un seul tenant, la première aile présentant une première extrémité plaquée contre la contreplaque et une deuxième extrémité plaquée contre la première face de la deuxième extrémité de l'âme du deuxième tronçon de rail, la deuxième aile étant plaquée contre la plaque horizontale et reliée à cette dernière par des éléments de liaison.

Selon une autre caractéristique, le rail comprend deux âmes ainsi que des première et deuxième articulations, une pour chaque âme, symétriques par rapport à un plan médian parallèle aux deux âmes et positionné à équidistance des deux âmes.

Selon une autre caractéristique, les deuxièmes ailes des premières éclisses des première et deuxième articulations sont positionnées entre les deux âmes.

Selon une autre caractéristique, le rail comprend un tronçon de rail avant, un tronçon de rail intermédiaire, un tronçon de rail arrière, au moins une articulation avant reliant le tronçon de rail avant et le tronçon de rail intermédiaire ainsi qu'au moins une articulation arrière reliant le tronçon de rail intermédiaire et le tronçon de rail arrière, les articulations avant et arrière étant symétriques par rapport à un plan transversal situé à équidistance des tronçons de rail avant et arrière.

Selon une autre caractéristique, le rail comprend un tronçon de rail avant relié au tronçon de fuselage avant et un tronçon de rail arrière relié au caisson central de voilure.

Selon une autre caractéristique, le plancher comprend plusieurs rails espacés selon une direction transversale perpendiculaire à la direction longitudinale ainsi que des panneaux horizontaux supportés par les rails, ces derniers délimitant entre eux des espaces obturés par les panneaux horizontaux.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une coupe longitudinale d'une partie du fuselage de l'aéronef visible sur la figure 1,
- La figure 3 est une vue latérale d'une partie d'un plancher d'une cabine d'un aéronef illustrant un mode de réalisation de l'invention,
- La figure 4 est une coupe transversale d'une partie du plancher d'une cabine d'un aéronef illustrant un mode de réalisation de l'invention,

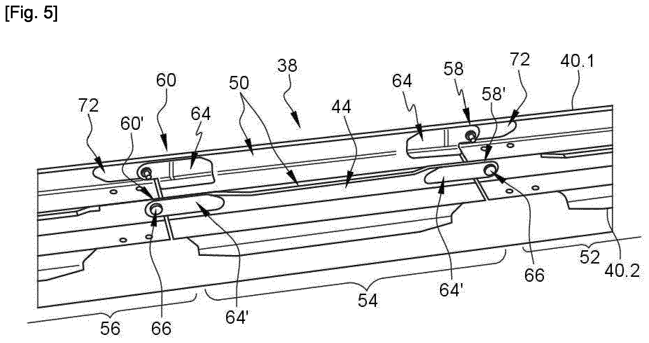

- La figure 5 est une vue en perspective d'un rail du plancher visible sur la figure 4,
- La figure 6 est une coupe transversale du rail visible sur la figure 5,
- La figure 7 est une vue en perspective d'une articulation reliant deux tronçons de rail illustrant un mode de réalisation de l'invention,
- La figure 8 est une coupe longitudinale et horizontale, selon le plan P de la figure 7, de l'articulation visible sur la figure 7, et
- La figure 9 est une coupe longitudinale et horizontale d'une articulation reliant deux tronçons de rail illustrant un autre mode de réalisation.

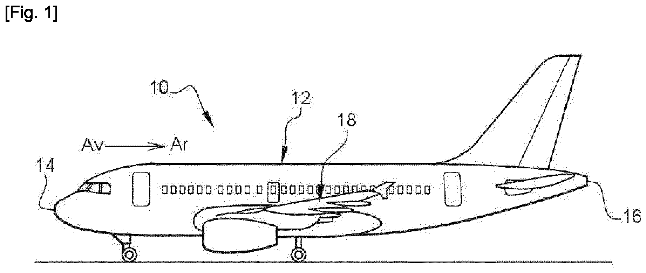

Comme illustré sur la figure 1, un aéronef 10 comprend un fuselage 12 qui s'étend entre une pointe avant 14 et un cône arrière 16, ainsi que des ailes 18 disposées de part et d'autre du fuselage 12 et reliées à ce dernier par un caisson central de voilure 20.

Pour la suite de la description, un axe longitudinal 22 de l'aéronef 10 correspond à l'axe horizontal (lorsque l'aéronef 10 est au sol) qui s'étend de la pointe avant 14 au cône arrière 16 de l'aéronef 10. Une direction longitudinale est une direction parallèle à l'axe longitudinal 22. Un plan longitudinal est un plan comprenant un axe qui est parallèle à l'axe longitudinal 22. Un plan transversal est un plan perpendiculaire à l'axe longitudinal 22.

Les notions avant (Av) et arrière (Ar) font référence au sens d'écoulement de l'air à l'extérieur de l'aéronef en vol qui va de l'avant vers l'arrière.

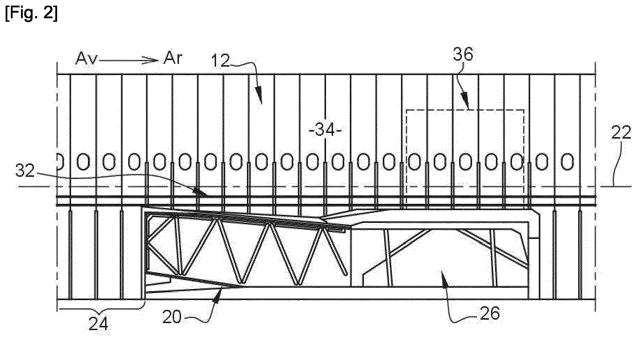

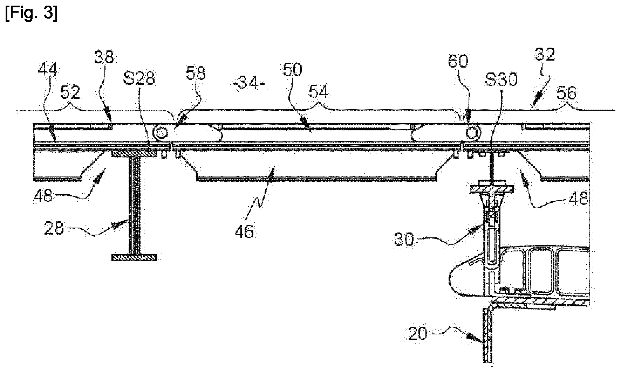

Comme illustré sur les figures 2 et 3, le fuselage 12 comprend également un tronçon de fuselage avant 24 situé à l'avant du caisson central de voilure 20, une case de train d'atterrissage principale 26 décalée vers l'arrière par rapport au caisson central de voilure 20, au moins une première poutre transversale 28 solidaire du tronçon de fuselage avant 24, au moins une deuxième poutre transversale 30 solidaire du caisson central de voilure 20 ainsi qu'un plancher 32 positionné au-dessus du caisson central de voilure 20 et reposant sur les première et deuxième poutres transversales 28, 30.

Selon un mode de réalisation, la première poutre transversale 28 présente une section en I. Bien entendu, l'invention n'est pas limitée à cette section. Quel que soit le mode de réalisation, la première poutre transversale 28 comprend une première semelle supérieure transversale S28.

Selon un mode de réalisation, la deuxième poutre transversale 30 comprend une partie inférieure avec une section en T et une partie supérieure avec une section en I. Bien entendu, l'invention n'est pas limitée à ce mode de réalisation. Quel que soit le mode de réalisation, la deuxième poutre transversale 30 comprend une deuxième semelle supérieure transversale S30.

En vol, le caisson central de voilure 20 tend à se déplacer par rapport au reste du fuselage 12, plus particulièrement par rapport au tronçon de fuselage avant 24. Ainsi, le caisson central de voilure 20 peut légèrement pivoter ou se déformer selon un axe de pivotement transversal et horizontal par rapport au tronçon de fuselage avant 24.

Selon une application, la zone du fuselage située au-dessus du plancher 32 forme une cabine 34 dans laquelle peut être stocké un chargement. Ce dernier comprend au moins un conteneur 36 (représenté en pointillés sur la figure 2). Pour faciliter le déplacement des conteneurs dans la cabine 34, le plancher 32 comprend au moins un rail 38 parallèle à la direction longitudinale, qui s'étend au-dessus du caisson central de voilure 20 et dans le tronçon de fuselage avant 24.

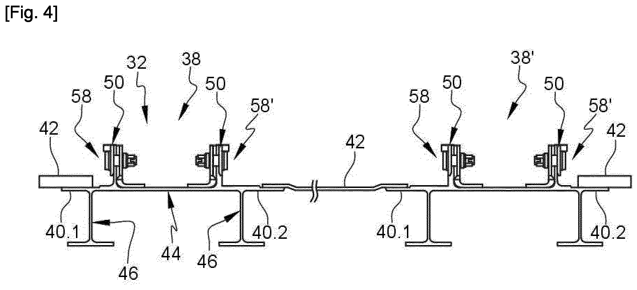

Selon un agencement visible sur la figure 4, le plancher 32 comprend au moins une paire de rails 38, 38' parallèles entre eux.

Selon un mode de réalisation, chaque rail 38, 38' comprend de part et d'autre des extensions horizontales 40.1, 40.2 configurées pour supporter des panneaux horizontaux 42. Ainsi, le plancher 32 comprend plusieurs rails 38, 38' espacés selon la direction transversale ainsi que des panneaux horizontaux 42 supportés par les rails 38, 38', les rails 38, 38' délimitant entre eux des espaces obturés par les panneaux horizontaux 42. De la sorte, les rails 38, 38' sont intégrés dans le plancher 32 et forment une structure porteuse pour les panneaux horizontaux 42. Ainsi, contrairement à l'art antérieur qui prévoit des panneaux de plancher qui supportent les rails, l'invention prévoit des rails qui supportent les panneaux de plancher.

Les panneaux horizontaux 42 peuvent être réalisés en différents matériaux, comme en bois, en métal, en matériau composite ou autres.

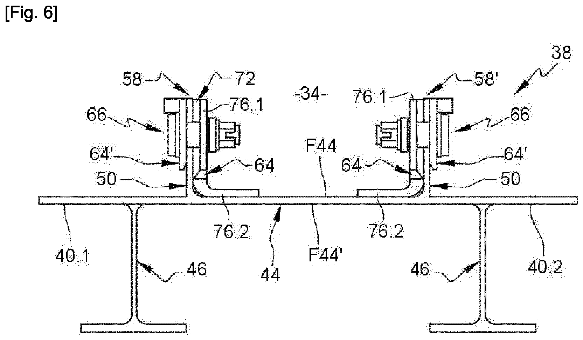

Selon un mode de réalisation visible sur la figure 4, les rails 38, 38' sont identiques. Comme illustré sur la figure 6, chaque rail 38, 38' comprend une plaque horizontale 44 qui présente une face supérieure F44 orientée vers la cabine 34, une face inférieure F44' orientée vers le caisson central de voilure 20 ainsi que des bords latéraux formant les extensions horizontales 40.1, 40.2. Selon une configuration, la plaque horizontale 44 est renforcée. Dans ce cas, le rail 38, 38' comprend au moins une nervure 46 positionnée au niveau de la face inférieure F44' de la plaque horizontale 44 et reliée à cette dernière. A titre d'exemple, le rail 38, 38' présente deux nervures 46 avec un profil en T inversé. Chaque nervure 46 est parallèle à la direction longitudinale.

Selon un agencement, chaque nervure 46 présente une découpe 48 au droit des première et deuxième poutres transversales 28 et 30 de sorte que la plaque horizontale 44 repose sur les première et deuxième semelles supérieures transversales S28, S30.

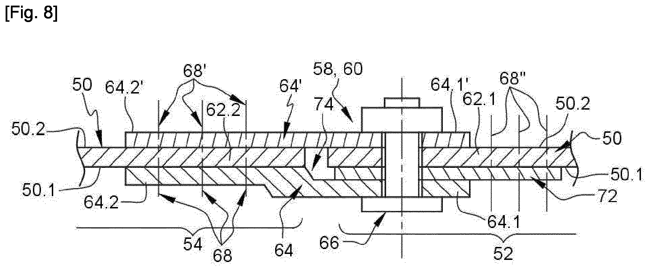

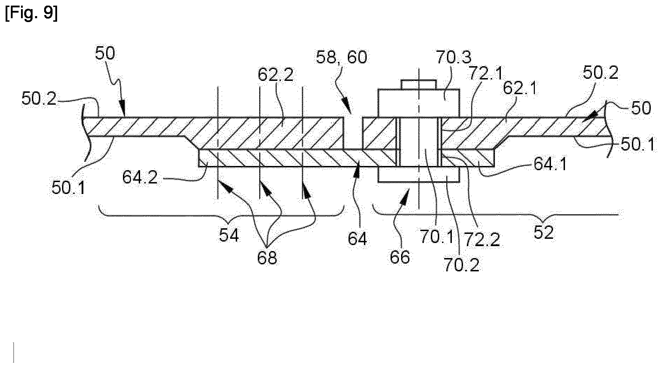

Chaque rail 38, 38' présente au moins une âme 50 sensiblement verticale et parallèle à la direction longitudinale, qui s'étend à partir de la face supérieure F44 en direction de la cabine 34. Chaque âme 50 présente des première et deuxième faces 50.1, 50.2 (référencées sur les figures 8 et 9). Chaque âme 50 peut avoir une section transversale en I, en L inversé, en T inversé ou toute autre section. La plaque horizontale 44 s'étend de part et d'autre de l'âme 50 ou des âmes 50.

Selon une application, les conteneurs 36 présentent en partie inférieure des galets leur permettant de rouler. Selon un agencement visible sur la figure 6, chaque rail 38, 38' comporte deux âmes 50 parallèles entre elles et espacées entre elles d'une distance déterminée en fonction de la largeur des galets des conteneurs 36.

Selon un mode de réalisation, la plaque horizontale 44, les nervures 46 et les âmes 50 sont réalisées d'un seul tenant. Ainsi, chaque rail 38, 38' se présente sous la forme d'un profilé à section sensiblement constante.

Bien entendu, l'invention n'est pas limitée à ce mode de réalisation pour les rails 38, 38'. Quel que soit le mode de réalisation, chaque rail 38, 38' présente au moins une âme 50 configurée pour coopérer avec les conteneurs 36.

Selon un mode de réalisation visible sur la figure 3, chaque rail 38, 38' comprend plusieurs tronçons de rails 52, 54, 56 positionnés bout à bout selon la direction longitudinale. Selon un agencement, chaque rail 38, 38' comprend un tronçon de rail avant 52 solidaire du tronçon de fuselage avant 24, un tronçon de rail arrière 56 solidaire du caisson central de voilure 20, les tronçons de rail avant et arrière étant espacés l'un de l'autre, ainsi qu'un tronçon de rail intermédiaire 54 positionné entre les tronçons de rail avant et arrière 52, 56.

Les tronçons de rail avant et intermédiaire 52, 54 sont faiblement espacés, de l'ordre de quelques millimètres. De même, les tronçons de rail intermédiaire et arrière 54, 56 sont faiblement espacés, de l'ordre de quelques millimètres.

Les tronçons de rail avant et intermédiaire 52, 54 sont reliés par au moins une articulation avant 58. En parallèle, les tronçons de rail intermédiaire et arrière 54, 56 sont reliés par au moins une articulation arrière 60. Selon une configuration, chacune des articulations avant et arrière 58, 60 est configurée pour permettre un mouvement de pivotement selon un axe de pivotement transversal et horizontal entre les deux tronçons de rail 52, 54, 56 reliés.

Bien entendu, l'invention n'est pas limitée à ce mode de réalisation. Quel que soit le mode de réalisation, le rail 38, 38' comprend au moins des premier et deuxième tronçons de rail 52, 54, 56 parmi les tronçons de rail avant, intermédiaire et arrière, positionnés bout à bout selon la direction longitudinale, l'un d'eux étant relié au tronçon de fuselage avant 24 ou au caisson central de voilure 20 ; ainsi qu'au moins une articulation 58, 60 reliant les premier et deuxième tronçons de rail 52, 54, 56, configurée pour permettre un mouvement de pivotement selon un axe de pivotement transversal et horizontal entre les premier et deuxième tronçons de rail 52, 54, 56 reliés.

Selon un mode de réalisation simplifié visible sur la figure 9, l'articulation 58, 60, reliant une première extrémité 62.1 de l'âme 50 du premier tronçon de rail 52 et une deuxième extrémité 62.2 de l'âme 50 du deuxième tronçon de rail 54, comprend au moins une éclisse 64 présentant une première extrémité 64.1 plaquée contre la première ou deuxième face 50.1, 50.2 de la première extrémité 62.1 de l'âme 50 du premier tronçon de rail 52 et une deuxième extrémité 64.2 plaquée contre la face droite ou gauche 50.1, 50.2 de la deuxième extrémité 62.2 de l'âme 50 du deuxième tronçon de rail 54, un axe de pivotement 66, orienté perpendiculairement à la direction longitudinale, traversant la première extrémité 62.1 de l'âme 50 du premier tronçon de rail 52 et la première extrémité 64.1 de l'éclisse 64 ainsi qu'au moins une première liaison 68 complète reliant la deuxième extrémité 62.2 de l'âme 50 du deuxième tronçon de rail 54 et la deuxième extrémité 64.2 de l'éclisse 64.

L'axe de pivotement 66 comprend un cylindre 70.1, une première butée 70.2 positionnée à une première extrémité du cylindre 70.1 ainsi qu'une deuxième butée 70.3 positionnée à une deuxième extrémité du cylindre 70.1, le cylindre 70.1, les première et deuxième butées 70.2, 70.3 étant configurés de manière à maintenir l'éclisse 64 plaquée contre l'âme 50 du premier tronçon 52. Selon un mode de réalisation, l'axe de pivotement 66 est un boulon, la vis du boulon correspondant au cylindre 70.1 et à la première butée 70.2, l'écrou du boulon correspondant à la deuxième butée 70.3.

En complément, la première extrémité 62.1 de l'âme 50 du premier tronçon de rail 52 présente un trou traversant 72.1 configuré pour loger l'axe de pivotement 66. En parallèle, la première extrémité 64.1 de l'éclisse 64 présente un trou traversant 72.2 configuré pour loger l'axe de pivotement 66.

La liaison 68 est une liaison complète obtenue par collage, boulonnage, sertissage ou toute autre technique d'assemblage.

Selon un mode de réalisation visible sur la figure 9, l'articulation 58, 60 comprend une unique éclisse 64. Selon ce mode de réalisation, au moins l'une des extrémités parmi les première et deuxième extrémités 62.1, 62.2 de l'âme 50 des premier et deuxième tronçons de rail 52, 54 comprend une surépaisseur.

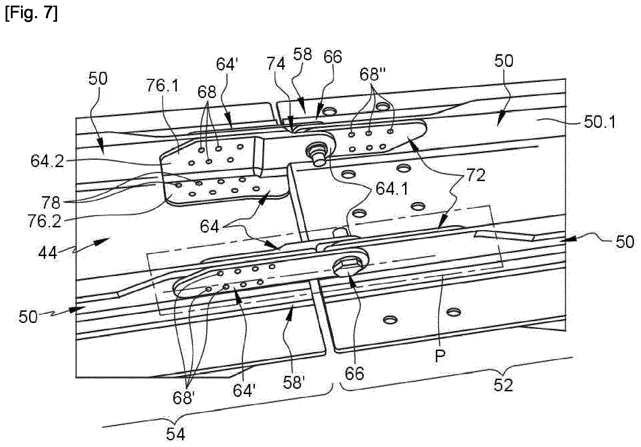

Selon un autre mode de réalisation visible sur les figures 7 et 8, l'articulation 58, 60 comprend :
- une contreplaque 72 plaquée contre la première face 50.1 de la première extrémité 62.1 de l'âme 50 du premier tronçon de rail 52,
- une première éclisse 64 présentant une première extrémité 64.1 plaquée contre la contreplaque 72 et une deuxième extrémité 64.2 plaquée contre la première face 50.1 de la deuxième extrémité 62.2 de l'âme 50 du deuxième tronçon de rail 54,
- une deuxième éclisse 64' présentant une première extrémité 64.1' plaquée contre la deuxième face 50.2 de la première extrémité 62.1 de l'âme 50 du premier tronçon de rail 52 et une deuxième extrémité 64.2' plaquée contre la deuxième face 50.2 de la deuxième extrémité 62.2 de l'âme 50 du deuxième tronçon de rail 54,
- un axe de pivotement 66 traversant la première extrémité 62.1 de l'âme 50 du premier tronçon de rail 52, la contreplaque 72 ainsi que les premières extrémités 64.1, 64.1' des première et deuxième éclisses 64, 64',
- au moins une première liaison 68 complète, reliant la deuxième extrémité 62.2 de l'âme 50 du deuxième tronçon de rail 54 et la deuxième extrémité 64.2 de la première éclisse 64,
- au moins une deuxième liaison 68' complète, reliant la deuxième extrémité 62.2 de l'âme 50 du deuxième tronçon de rail 54 et la deuxième extrémité 64.2' de la deuxième éclisse 64',
- au moins une troisième liaison 68" complète, reliant la contreplaque 72 et la première extrémité 62.1 de l'âme 50 du premier tronçon de rail 52.

Les première et deuxième liaisons 68, 68' peuvent ne former qu'une seule et même liaison comprenant des boulons, des rivets ou autres traversant la deuxième extrémité 62.2 de l'âme 50 du deuxième tronçon de rail 54 ainsi que les deuxièmes extrémités 64.2, 64.2' des première et deuxième éclisses 64, 64'.

D'autres solutions sont envisageables pour les première et deuxième liaisons 68, 68' afin d'obtenir des liaisons complètes.

La troisième liaison 68" est une liaison complète obtenue par collage, boulonnage, sertissage ou toute autre technique d'assemblage.

L'axe de pivotement 66 du mode de réalisation visible sur les figures 7 et 8 peut être identique à celui du mode de réalisation visible sur la figure 9.

La première éclisse 64 comprend un décrochement 74, entre ses première et deuxième extrémités 64.1, 64.2, pour loger la contreplaque 72.

Selon un mode de réalisation, la deuxième éclisse 64' se présente sous la forme d'une plaque. La première éclisse 64 comprend deux ailes 76.1, 76.2, formant un angle d'environ 90°, réalisées d'un seul tenant, une première aile 76.1 présentant une première extrémité plaquée contre la contreplaque 72 et une deuxième extrémité plaquée contre la première face 50.1 de la deuxième extrémité 62.2 de l'âme 50 du deuxième tronçon de rail 54 ainsi qu'une deuxième aile 76.2 plaquée contre la plaque horizontale 44 et reliée à cette dernière par des éléments de liaisons 78. Cette deuxième aile 76.2 est plus courte que la première aile 76.1 de manière à ne pas s'étendre au-delà du deuxième tronçon de rail 54.

Lorsque le rail 38, 38' comprend deux âmes 50, il comprend des première et deuxième articulations 58, 58' (ou 60, 60'), une pour chaque âme 50. Ces première et deuxième articulations sont symétriques, par rapport à un plan médian parallèle aux deux âmes 50 et positionné à équidistance des deux âmes 50. Lorsque la première éclisse 64 de chacune des première et deuxième articulations 58, 58' (ou 60, 60') comprend des première et deuxième ailes 76.1, 76.2, les deuxièmes ailes 76.2 des premières éclisses 64 des première et deuxième articulations sont positionnées entre les deux âmes 50.

Lorsque le rail 38, 38' comprend au moins une articulation avant 58, 58' et au moins une articulation arrière 60, 60', les articulations avant et arrière 58, 58', 60, 60' sont symétriques par rapport à un plan transversal situé à équidistance des tronçons de rail avant et arrière 52, 56, les contreplaques 72 des articulations 58, 58', 60, 60' avant et arrière étant reliées par une troisième liaison 68" complète aux tronçons de rails avant et arrière 52, 56, les première et deuxième éclisses 64, 64' des articulations 58, 58', 60, 60' avant et arrière présentant des extrémités 64.2, 64.2' reliées par des première et deuxième liaisons 68, 68' complètes à l'âme 50 ou aux âmes 50 du tronçon de rail intermédiaire 54.

Quel que soit le mode de réalisation, le rail 38, 38' comprend au moins une âme, au moins des premier et deuxième tronçons de rail, au moins une articulation 58, 60 reliant une première extrémité 62.1 de l'âme 50 du premier tronçon de rail 52 et une deuxième extrémité 62.2 de l'âme 50 du deuxième tronçon de rail 54. Cette articulation 58, 60 comprend au moins une éclisse 64 présentant des première et deuxième extrémités 64.1, 64.2, un axe de pivotement 66 traversant la première extrémité 62.1 de l'âme 50 du premier tronçon de rail 52 et la première extrémité 64.1 de l'éclisse 64 ainsi qu'au moins une première liaison 68 complète reliant la deuxième extrémité 62.2 de l'âme 50 du deuxième tronçon de rail 54 et la deuxième extrémité 64.2 de l'éclisse 64.

Cette solution permet aux rails de s'adapter aux mouvements et/ou déformations entre les différents tronçons du fuselage. Par conséquent, le rail peut être intégré dans le plancher de la cabine 34 ce qui permet d'optimiser la hauteur disponible entre les rails et le plafond de la cabine.

Pour renforcer l'articulation, cette dernière peut comprendre une contreplaque 72 prévue pour renforcer l'âme 50 d'un premier tronçon de rail et assurer la transmission des efforts entre l'axe de pivotement 66 et ce premier tronçon de rail.

Elle peut comprendre deux éclisses 64, 64' disposées de part et d'autre des âmes des premier et deuxième tronçons de rail, prévues pour renforcer l'âme 50 du deuxième tronçon de rail et assurer la transmission des efforts entre l'axe de pivotement 66 et ce deuxième tronçon de rail.

## Revendications

1. Aéronef comprenant un plancher (32) positionné au-dessus d'un caisson central de voilure (20) et dans un tronçon de fuselage avant (24) positionné, selon une direction longitudinale, à l'avant du caisson central de voilure (20), le plancher comprenant au moins un rail (38, 38') qui s'étend selon la direction longitudinale et présente au moins une âme (50) ; **caractérisé en ce que** le rail (38, 38') comprend au moins des premier et deuxième tronçons de rail (52, 54), au moins une articulation (58, 60) reliant une première extrémité (62.1) de l'âme (50) du premier tronçon de rail (52) et une deuxième extrémité (62.2) de l'âme (50) du deuxième tronçon de rail (54), l'articulation (58, 60) comprenant au moins une éclisse (64) présentant des première et deuxième extrémités (64.1, 64.2), un axe de pivotement (66) orienté perpendiculairement à la direction longitudinale, traversant la première extrémité (62.1) de l'âme (50) du premier tronçon de rail (52) et la première extrémité (64.1) de l'éclisse (64), ainsi qu'au moins une première liaison (68) complète reliant la deuxième extrémité (62.2) de l'âme (50) du deuxième tronçon de rail (54) et la deuxième extrémité (64.2) de l'éclisse (64).

2. Aéronef selon la revendication 1, **caractérisé en ce que** chaque articulation (58, 60) comprend des première et deuxième éclisses (64, 64') positionnées de part et d'autre de l'âme (50) de chacune des première et deuxième extrémités (62.1, 62.2) des premier et deuxième tronçons de rail (52, 54), les première et deuxième éclisses (64, 64') présentant des premières extrémités (64.1, 64.1') traversées par l'axe de pivotement (66) et des deuxièmes extrémités (64.2, 64.2') reliées par au moins une liaison (68, 68') complète à la deuxième extrémité (62.2) de l'âme (50) du deuxième tronçon de rail (54).

3. Aéronef selon la revendication précédente, **caractérisé en ce que** l'âme (50) de chacune des première et deuxième extrémités (62.1, 62.2) des premier et deuxième tronçons de rail (52, 54) comprend des première et deuxième faces (50.1, 50.2) et **en ce que** chaque articulation (58, 60) comprend une contreplaque (72) plaquée contre la première face (50.1) de la première extrémité (62.1) de l'âme (50) du premier tronçon de rail (52) et reliée à cette première extrémité (62.1) par une liaison (68'') complète ; la première extrémité (64.1) de la première éclisse (64) étant plaquée contre la contreplaque (72) ; la deuxième extrémité (64.2) de la première éclisse (64) étant plaquée contre la première face (50.1) de la deuxième extrémité (62.2) de l'âme (50) du deuxième tronçon de rail (54) et reliée à cette deuxième extrémité (62.2) par une liaison (68) complète ; la première extrémité (64.1') de la deuxième éclisse (64') étant plaquée contre la deuxième face (50.2) de la première extrémité (62.1) de l'âme (50) du premier tronçon de rail (52) ; la deuxième extrémité (64.2') de la deuxième éclisse (64') étant plaquée contre la deuxième face (50.2) de la deuxième extrémité (62.2) de l'âme (50) du deuxième tronçon de rail (54) et reliée à cette deuxième extrémité (62.2) par une liaison (68') complète ; l'axe de pivotement (66) traversant la première extrémité (62.1) de l'âme (50) du premier tronçon de rail (52), la contreplaque (72) ainsi que les premières extrémités (64.1, 64.1') des première et deuxième éclisses (64, 64').

4. Aéronef selon la revendication précédente, **caractérisé en ce que** la première éclisse (64) comprend un décrochement (74) entre ses première et deuxième extrémités (64.1, 64.2), pour loger la contreplaque (72).

5. Aéronef selon la revendication 3 ou 4, **caractérisé en ce que** le rail (38, 38') comprend une plaque horizontale (44) qui présente une face supérieure (F44) sur laquelle est positionnée l'âme (50) et **en ce que** la première éclisse (64) comprend des première et deuxième ailes (76.1, 76.2) formant un angle d'environ 90°, réalisées d'un seul tenant, la première aile (76.1) présentant une première extrémité plaquée contre la contreplaque (72) et une deuxième extrémité plaquée contre la première face (50.1) de la deuxième extrémité (62.2) de l'âme (50) du deuxième tronçon de rail (54), la deuxième aile (76.2) étant plaquée contre la plaque horizontale (44) et reliée à cette dernière par des éléments de liaison (78).

6. Aéronef selon l'une des revendications précédentes, **caractérisé en ce que** le rail (38, 38') comprend deux âmes (50) ainsi que des première et deuxième articulations (58, 58', 60, 60'), une pour chaque âme (50), symétriques par rapport à un plan médian parallèle aux deux âmes (50) et positionné à équidistance des deux âmes (50).

7. Aéronef selon les revendications 6 et 7, **caractérisé en ce que** les deuxièmes ailes (76.2) des premières éclisses (64) des première et deuxième articulations sont positionnées entre les deux âmes (50).

8. Aéronef selon l'une des revendications précédentes, **caractérisé en ce que** le rail (38, 38') comprend un tronçon de rail avant (52), un tronçon de rail intermédiaire (54), un tronçon de rail arrière (56), au moins une articulation avant (58) reliant le tronçon de rail avant (52) et le tronçon de rail intermédiaire (54) ainsi qu'au moins une articulation arrière (60) reliant le tronçon de rail intermédiaire (54) et le tronçon de rail arrière (56), les articulations avant et arrière (58, 58', 60, 60') étant symétriques par rapport à un plan transversal situé à équidistance des tronçons de rail avant et arrière (52, 56).

9. Aéronef selon l'une des revendications précédentes, **caractérisé en ce que** le rail (38, 38') comprend un tronçon de rail avant (52) relié au tronçon de fuselage avant (24) et un tronçon de rail arrière (56) relié au caisson central de voilure (20).

10. Aéronef selon l'une des revendications précédentes, **caractérisé en ce que** le plancher (32) comprend plusieurs rails (38, 38') espacés selon une direction transversale perpendiculaire à la direction longitudinale ainsi que des panneaux horizontaux (42) supportés par les rails (38, 38'), les rails (38, 38') délimitant entre eux des espaces obturés par les panneaux horizontaux (42).

## Patentansprüche

1. Luftfahrzeug, umfassend einen Boden (32), der über einem Flügelmittelkasten (20) und in einem vorderem Rumpfabschnitt (24) angeordnet ist, der entlang einer Längsrichtung an der Vorderseite des Flügelmittelkastens (20) angeordnet ist, wobei der Boden mindestens eine Schiene (38, 38') umfasst, die sich entlang der Längsrichtung erstreckt und mindestens einen Steg (50) aufweist; **dadurch gekennzeichnet, dass** die Schiene (38, 38') mindestens erste und zweite Schienenabschnitte (52, 54), mindestens ein Gelenk (58, 60), das ein erstes Ende (62.1) des Stegs (50) des ersten Schienenabschnitts (52) und ein zweites Ende (62.2) des Stegs (50) des zweiten Schienenabschnitts (54) verbindet, wobei das Gelenk (58, 60) mindestens eine Lasche (64) umfasst, die erste und zweite Enden (64.1, 64.2) aufweist, eine senkrecht zur Längsrichtung ausgerichtete Schwenkachse (66), die das erste Ende (62.1) des Stegs des ersten Schienenabschnitts (52) und das erste Ende (64.1) der Lasche (64) durchdringt, sowie mindestens eine erste vollständige Verbindung (68), die das zweite Ende (62.2) des Stegs (50) des zweiten Schienenabschnitts (54) und das zweite Ende (64.2) der Lasche (64) verbindet, umfasst.

2. Luftfahrzeug nach Anspruch 1, **dadurch gekennzeichnet, dass** jedes Gelenk (58, 60) erste und zweite Laschen (64, 64') umfasst, die beidseits des Stegs (50) jedes der ersten und zweiten Enden (62.1, 62.2) der ersten und zweiten Schienenabschnitte (52, 54) angeordnet sind, wobei die ersten und zweiten Laschen (64, 64') erste Enden (64.1, 64.1'), die von der Schwenkachse (66) durchdrungen werden, und zweite Enden (64.2, 64.2'), die durch mindestens eine vollständige Verbindung (68, 68') mit dem zweiten Ende (62.2) des Stegs (50) des zweiten Schienenabschnitts (54) verbunden sind, aufweisen.

3. Luftfahrzeug nach dem vorhergehenden Anspruch, **dadurch gekennzeichnet, dass** der Steg (50) jedes der ersten und zweiten Enden (62.1, 62.2) der ersten und zweiten Schienenabschnitte (52, 54) erste und zweite Seiten (50.1, 50.2) umfasst und dass jedes Gelenk (58, 60) eine Gegenplatte (72) umfasst, die gegen die erste Seite (50.1) des ersten Endes (62.1) des Stegs (50) des ersten Schienenabschnitts (52) gepresst ist und mit diesem ersten Ende (62.1) durch eine vollständige Verbindung (68") verbunden ist; wobei das erste Ende (64.1) der ersten Lasche (64) gegen die Gegenplatte (72) gepresst ist; wobei das zweite Ende (64.2) der ersten Lasche (64) gegen die erste Seite (50.1) des zweiten Endes (62.2) des Stegs (50) des zweiten Schienenabschnitts (54) gepresst ist und mit diesem zweiten Ende (62.2) durch eine vollständige Verbindung (68) verbunden ist; wobei das erste Ende (64.1') der zweiten Lasche (64') gegen die zweite Seite (50.2) des ersten Endes (62.1) des Stegs (50) des ersten Schienenabschnitts (52) gepresst ist; wobei das zweite Ende (64.2') der zweiten Lasche (64') gegen die zweite Seite (50.2) des zweiten Endes (62.2) des Stegs (50) des zweiten Schienenabschnitts (54) gepresst ist und mit diesem zweiten Ende (62.2) durch eine vollständige Verbindung (68') verbunden ist; wobei die Schwenkachse (66) das erste Ende (62.1) des Stegs (50) des ersten Schienenabschnitts (52), die Gegenplatte (72) sowie die ersten Enden (64.1, 64.1') der ersten und zweiten Laschen (64, 64') durchdringt.

4. Luftfahrzeug nach dem vorhergehenden Anspruch, **dadurch gekennzeichnet, dass** die erste Lasche (64) einen Rücksprung (74) zwischen ihren ersten und zweiten Enden (64.1, 64.2) zum Aufnehmen der Gegenplatte (72) umfasst.

5. Luftfahrzeug nach Anspruch 3 oder 4, **dadurch gekennzeichnet, dass** die Schiene (38, 38') eine horizontale Platte (44) umfasst, die eine Oberseite (F44) aufweist, auf welcher der Steg (50) angeordnet ist, und dass die erste Lasche (64) erste und zweite Schenkel (76.1, 76.2) umfasst, die einen Winkel von ungefähr 90° bilden und einstückig ausgeführt sind, wobei der erste Schenkel (76.1) ein erstes Ende aufweist, das gegen die Gegenplatte (72) gepresst ist, und ein zweites Ende, das gegen die erste Seite (50.1) des zweiten Endes (62.2) des Stegs (50) des zweiten Schienenabschnitts (54) gepresst ist, wobei der zweite Schenkel (76.2) gegen die horizontale Platte (44) gepresst ist und mit Letzterer durch Verbindungselemente (78) verbunden ist.

6. Luftfahrzeug nach einem der vorhergehenden Ansprüche, **dadurch gekennzeichnet, dass** die Schiene (38, 38') zwei Stege (50) umfasst sowie erste und zweite Gelenke (58, 58', 60, 60'), eines für jeden Steg (50), die symmetrisch in Bezug auf eine Mittelebene sind, die parallel zu den beiden Stegen (50) ist und abstandsgleich zu den beiden Stegen (50) angeordnet ist.

7. Luftfahrzeug nach den Ansprüchen 6 und 7, **dadurch gekennzeichnet, dass** die zweiten Schenkel (76.2) der ersten Laschen (64) der ersten und zweiten Gelenke zwischen den beiden Stegen (50) angeordnet sind.

8. Luftfahrzeug nach einem der vorhergehenden Ansprüche, **dadurch gekennzeichnet, dass** die Schiene (38, 38') einen vorderen Schienenabschnitt (52), einen mittleren Schienenabschnitt (54), einen hinteren Schienenabschnitt (56), mindestens ein vorderes Gelenk (58), das den vorderen Schienenabschnitt (52) und den mittleren Schienenabschnitt (54) verbindet, sowie mindestens ein hinteres Gelenk (60), das den mittleren Schienenabschnitt (54) und den hinteren Schienenabschnitt (56) verbindet, umfasst, wobei die vorderen und hinteren Gelenke (58, 58', 60, 60') symmetrisch in Bezug auf eine Querebene sind, die abstandsgleich zu den vorderen und hinteren Schienenabschnitten (52, 56) ist.

9. Luftfahrzeug nach einem der vorhergehenden Ansprüche, **dadurch gekennzeichnet, dass** die Schiene (38, 38') einen vorderen Schienenabschnitt (52), der mit dem vorderen Rumpfabschnitt (24) verbunden ist, und einen hinteren Schienenabschnitt (56), der mit dem Flügelmittelkasten (20) verbunden ist, umfasst.

10. Luftfahrzeug nach einem der vorhergehenden Ansprüche, **dadurch gekennzeichnet, dass** der Boden (32) mehrere Schienen (38, 38'), die entlang einer senkrecht zur Längsrichtung verlaufenden Querrichtung beabstandet sind, sowie horizontale Platten (42), die von den Schienen (38, 38') getragen werden, umfasst, wobei die Schienen (38, 38') untereinander Räume begrenzen, die durch die horizontalen Platten (42) verschlossen werden.

## Claims

1. Aircraft comprising a floor (32) positioned above a central wing box (20) and in a front fuselage portion (24) positioned, along a longitudinal direction, in front of the central wing box (20), the floor comprising at least one rail (38, 38') which extends along the longitudinal direction and has at least one core (50); **characterized in that** the rail (38, 38') comprises at least first and second rail portions (52, 54), at least one articulation (58, 60) connecting a first end (62.1) of the core (50) of the first rail portion (52) and a second end (62.2) of the core (50) of the second rail portion (54), the articulation (58, 60) comprising at least one splice plate (64) having first and second ends (64.1, 64.2), a pivot pin (66) oriented perpendicularly to the longitudinal direction, passing through the first end (62.1) of the core (50) of the first rail portion (52) and the first end (64.1) of the splice plate (64), and at least one first complete link (68) connecting the second end (62.2) of the core (50) of the second rail portion (54) and the second end (64.2) of the splice plate (64).

2. Aircraft according to Claim 1, **characterized in that** each articulation (58, 60) comprises first and second splice plates (64, 64') positioned on either side of the core (50) of each of the first and second ends (62.1, 62.2) of the first and second rail portions (52, 54), the first and second splice plates (64, 64') having first ends (64.1, 64.1') through which the pivot pin (66) passes and second ends (64.2, 64.2') connected by at least one complete link (68, 68') to the second end (62.2) of the core (50) of the second rail portion (54).

3. Aircraft according to the preceding claim, **characterized in that** the core (50) of each of the first and second ends (62.1, 62.2) of the first and second rail portions (52, 54) comprises first and second faces (50.1, 50.2), and **in that** each articulation (58, 60) comprises a backplate (72) pressed against the first face (50.1) of the first end (62.1) of the core (50) of the first rail portion (52) and connected to this first end (62.1) by a complete link (68"); the first end (64.1) of the first splice plate (64) being pressed against the backplate (72); the second end (64.2) of the first splice plate (64) being pressed against the first face (50.1) of the second end (62.2) of the core (50) of the second rail portion (54) and connected to this second end (62.2) by a complete link (68); the first end (64.1') of the second splice plate (64') being pressed against the second face (50.2) of the first end (62.1) of the core (50) of the first rail portion (52); the second end (64.2') of the second splice plate (64') being pressed against the second face (50.2) of the second end (62.2) of the core (50) of the second rail portion (54) and connected to this second end (62.2) by a complete link (68'); the pivot pin (66) passing through the first end (62.1) of the core (50) of the first rail portion (52), the backplate (72) and the first ends (64.1, 64.1') of the first and second splice plates (64, 64').

4. Aircraft according to the preceding claim, **characterized in that** the first splice plate (64) comprises a step (74) between its first and second ends (64.1, 64.2), in order to accommodate the backplate (72) .

5. Aircraft according to Claim 3 or 4, **characterized in that** the rail (38, 38') comprises a horizontal plate (44) which has an upper face (F44) on which the core (50) is positioned, and **in that** the first splice plate (64) comprises first and second wings (76.1, 76.2) that form an angle of around 90° and are produced integrally, the first wing (76.1) having a first end pressed against the backplate (72) and a second end pressed against the first face (50.1) of the second end (62.2) of the core (50) of the second rail portion (54), the second wing (76.2) being pressed against the horizontal plate (44) and connected to the latter by connecting elements (78).

6. Aircraft according to one of the preceding claims, **characterized in that** the rail (38, 38') comprises two cores (50) and first and second articulations (58, 58', 60, 60'), one for each core (50), which are symmetric with respect to a median plane parallel to the two cores (50) and positioned equidistantly from the two cores (50) .

7. Aircraft according to Claims 6 and 7, **characterized in that** the second wings (76.2) of the first splice plates (64) of the first and second articulations are positioned between the two cores (50).

8. Aircraft according to one of the preceding claims, **characterized in that** the rail (38, 38') comprises a front rail portion (52), an intermediate rail portion (54), a rear rail portion (56), at least one front articulation (58) connecting the front rail portion (52) and the intermediate rail portion (54), and at least one rear articulation (60) connecting the intermediate rail portion (54) and the rear rail portion (56), the front and rear articulations (58, 58', 60, 60') being symmetric with respect to a transverse plane situated equidistantly from the front and rear rail portions (52, 56).

9. Aircraft according to one of the preceding claims, **characterized in that** the rail (38, 38') comprises a front rail portion (52) connected to the front fuselage portion (24) and a rear rail portion (56) connected to the central wing box (20).

10. Aircraft according to one of the preceding claims, **characterized in that** the floor (32) comprises a plurality of rails (38, 38') spaced apart along a transverse direction perpendicular to the longitudinal direction, and horizontal panels (42) supported by the rails (38, 38'), the rails (38, 38') delimiting between one another spaces closed off by the horizontal panels (42) .
